# EUROPÄISCHE PATENTSCHRIFT

(11) **EP 2 237 941 B1**
(45) Veröffentlichungstag und Bekanntmachung des Hinweises auf die Patenterteilung: **16.04.2014**
(21) Anmeldenummer: 08871755.8
(22) Anmeldetag: 20.11.2008
(51) Int. Cl.: B29C 49/58, B29C 49/06, B29C 33/26, B29C 49/48, B29K 67/00, B29C 49/12, B29C 49/36

(54) **VERFAHREN UND VORRICHTUNG ZUR BLASFORMUNG VON BEHÄLTERN**
METHOD AND DEVICE FOR BLOW-MOLDING CONTAINERS
PROCÉDÉ ET DISPOSITIF DE FORMAGE PAR SOUFFLAGE DE RÉCIPIENTS

(30) Priorität: 31.01.2008 DE 102008007351
(43) Veröffentlichungstag der Anmeldung: 13.10.2010
(73) Patentinhaber: KHS Corpoplast GmbH, 22145 Hamburg (DE)
(72) Erfinder: LITZENBERG, Michael, 21502 Geesthacht (DE); LINKE, Michael, 22047 Hamburg (DE); BAUMGARTE, Rolf, 22926 Ahrensburg (DE); LEWIN, Frank, 22889 Tangstedt (DE)
(74) Vertreter: Hausfeld, Norbert
(86) Internationale Anmeldenummer: PCT/DE2008/001948
(87) Internationale Veröffentlichungsnummer: WO 2009/094963

(56) Entgegenhaltungen:
- EP-A- 0 919 354
- WO-A-2006/108382
- FR-A- 2 790 704
- GB-A- 1 602 221
- JP-A- 9 123 262

## Beschreibung

Die Erfindung betrifft ein Verfahren zur Blasformung von Behältern, bei dem ein Vorformling nach einer thermischen Konditionierung innerhalb einer Blasform durch Blasdruckeinwirkung in den Behälter umgeformt wird sowie bei dem ein Blasgas durch ein Anschlußelement hindurch in einen Innenraum des Vorformlings eingeleitet wird und bei dem das Anschlußelement zur Abdichtung gegenüber dem Vorformling in Richtung einer Vorformlingslängsachse von einer Andruckeinrichtung beaufschlagt wird, sowie bei dem auf das Anschlußelement einwirkende Druckkräfte von einer mechanischen Arretierung der Andruckeinrichtung aufgenommen werden und das Anschlußelement von der Arretierung lösbar fixiert wird.

Die Erfindung betrifft darüber hinaus eine Vorrichtung zur Blasformung von Behältern, die mindestens eine Blasstation mit einer Blasform aufweist, sowie bei der sich ein Strömungsweg für ein Blasgas zur Blasformung der Behälter durch ein Anschlußelement hindurch erstreckt und bei der die Blasstation mit dem in Richtung einer Längsachse positionierbaren Anschlußelement versehen ist, das mit einer Andruckeinrichtung gekoppelt ist, wobei die Andruckeinrichtung eine mechanische Arretierung zur Aufnahme von auf das Anschlußelement einwirkenden Druckkräften sowie zur lösbaren Fixierung des Anschlußelementes aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformlinge eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Gemäß dem Stand der Technik ist es bekannt, die Anschlußelemente sowohl pneumatisch als auch mechanisch unter Verwendung von Kurvensteuerungen zu positionieren. Kurvensteuerungen haben sich insbesondere bei Blasmaschinen mit rotierenden Blasrädern bewährt, da hier in Abhängigkeit von einer Rotationsbewegung des Blasrades die jeweiligen Positionierungen von der Kurvensteuerung vorgegeben werden können. Die Verwendung derartiger Kurvensteuerungen vermeidet einen zusätzlichen Druckluftverbrauch.

Neben der reinen mechanischen Positionierung des Anschlußelementes ist es aber auch erforderlich, auch bei Druckkräften, die auf das Anschlußelement einwirken, eine ausreichende Dichtigkeit zwischen dem Anschlußelement und der zugeordneten Blasform zu gewährleisten. Die Druckkräfte resultieren aus dem Blasdruck bei der Umformung der Vorformlinge in die Behälter, der auch auf das Anschlußelement einwirkt.

Die gemäß dem Stand der Technik verwendeten pneumatisch gesteuerten Kolben zur Vorgabe von Andruckkräften zwischen dem Anschlußelement und der Blasform führen aufgrund ihrer konstruktiven Realisierung zu einem erheblichen Verbrauch von Blasluft. Eine Steuerung der Kolben erfolgt typischerweise unter Verwendung der gleichen Hochdruckblasluft, die auch für die Behälterformung verwendet wird. Diese Hochdruckblasluft weist typischerweise einen Druck bis zu 40 bar auf. Typische Totraumvolumina, die im Zusammenhang mit der pneumatischen Ansteuerung der Kolben auftreten, liegen etwa im Bereich von 50 ml. Bei Hochleistungsblasmaschinen erfolgt je Stunde eine 2000-fache Ventilbetätigung je Blasstation und Hochleistungsblasmaschinen sind mit bis zu 30 Blasstationen ausgerüstet, so daß lediglich aus den erwähnten Totraumvolumina ein Verbrauch von etwa 3000 l/h an Druckluft mit einem Druck von 40 bar resultiert.

Aus der FR-A-2790704 sowie der GB-A-1602221 ist es jeweils bekannt, ein Anschlußelement für eine Blasstation unter Verwendung eines Kniehebels zu positionieren. Der Kniehebel wird unter Verwendung eines Pneumatikzylinders betätigt. In jeder Betriebsstellung wird der Kniehebel durch den Pneumatikzylinder kontrolliert, so daß eine kontinuierliche Versorgung mit Druckluft für den Kolben des Pneumatikzylinders erforderlich ist. Auch diese Ansteuervorrichtungen führen somit zu einem permanenten Verbrauch von Blasluft bzw. entsprechender Arbeitsluft.

Der insgesamt resultierende Blasluftverbrauch für die Ansteuerung der Kolben führt somit zu deutlichen Betriebskosten, darüber hinaus werden in der Regel auch die Investitionskosten erhöht, da ausreichend groß dimensionierte Kompressoren verwendet werden müssen.

Aufgabe der vorliegenden Erfindung ist es daher, ein Verfahren der einleitend genannten Art derart zu verbessern, daß der Verbrauch von Druckgas verringert wird.

Diese Aufgabe wird erfindungsgemäß dadurch gelöst, daß als Arretierung ein Kniehebel verwendet wird, der die Arretierfunktion in einer Übertotpunktlage ausübt.

Weitere Aufgabe der vorliegenden Erfindung ist es, eine Vorrichtung der einleitend genannten Art derart zu konstruieren, daß der Verbrauch an Druckgas vermindert wird.

Diese Aufgabe wird erfindungsgemäß dadurch gelöst, daß der Kniehebel in der Arretierungspositionierung in einer Übertotpunktlage angeordnet ist.

Durch die mechanische Generierung der erforderlichen Andruckkräfte wird der Verbrauch von Druckluft für diese Zwecke vollständig vermieden. Bei einer Kombination der kurvengesteuerten Positionierung des Anschlußelementes und der mechanischen Generierung der erforderlichen Anpreßkräfte kann der erforderliche Aufwand an Druckluft minimiert und erhebliche Betriebskosteneinsparungen erreicht werden, da die erforderlichen Positionierenergien über den Hauptantrieb der Blasmaschinen in das System eingebracht und von diesem Antrieb preiswert bereitgestellt werden können.

Eine mechanisch einfache und robuste Ausführungsform wird dadurch bereitgestellt, daß die Arretierung unter Verwendung eines Kniehebels angesteuert wird.

Eine exakte Reproduzierbarkeit der durchgeführten Bewegungsabläufe kann dadurch erreicht werden, daß die Arretierung kurvengesteuert positioniert wird.

Eine weitere mechanische Vereinfachung kann dadurch erfolgen, daß die Arretierung in einer Arretierungspositionierung lösbar fixiert wird.

Die mechanische Vereinfachung ermöglicht es insbesondere, daß die Arretierung lediglich abschnittweise entlang eines Umfanges eines Blasrades kurvengesteuert positioniert wird.

Eine Kraftaufnahme in der Arretierungspositionierung wird dadurch unterstützt, daß als Arretierung ein Kniehebel verwendet wird, der die Arretierfunktion in einer Übertotpunktlage ausübt.

Eine preiswerte Konstruktion wird dadurch unterstützt, daß eine Führungsrolle der Arretierung lediglich einseitig von einer Kurvenbahn beaufschlagt wird.

Zur Vermeidung eines Druckgasverbrauches trägt es ebenfalls bei, daß das Anschlußelement kurvengesteuert positioniert wird.

Eine typische Ausführungsform wird dadurch bereitgestellt, daß das Anschlußelement in lotrechter Richtung oberhalb der Glasform positioniert und zur Erreichung eines gegenüber der Blasform abgedichteten Zustandes gegenüber der Blasform abgesenkt wird.

Eine optimale Abdichtung kann dadurch erreicht werden, daß das Anschlußelement von mindestens einer elastischen Dichtung gegenüber der Blasform abgedichtet wird.

Mechanisch und/oder pneumatisch verursachte Abstandsänderungen können dadurch kompensiert werden, daß von der Dichtung Abstandsveränderungen zwischen dem Anschlußelement und der Blasform ausgeglichen werden.

In den Zeichnungen sind Ausführungsbeispiele der Erfindung schematisch dargestellt. Es zeigen:
Fig. 1 Eine perspektivische Darstellung einer Blasstation zur Herstellung von Behältern aus Vorformlingen,
Fig. 2 einen Längsschnitt durch eine Blasform, in der ein Vorformling gereckt und expandiert wird,
Fig. 3 eine Skizze zur Veranschaulichung eines grundsätzlichen Aufbaus einer Vorrichtung zur Blasformung von Behältern,
Fig. 4 eine modifizierte Heizstrecke mit vergrößerter Heizkapazität und
Fig. 5 eine schematische Seitenansicht einer im Bereich einer Blasform angeordneten Andruckeinrichtung, bei der sowohl eine Positionierung des Anschlußelementes als auch die Generierung von Andruckkräften mechanisch durchgeführt wird.

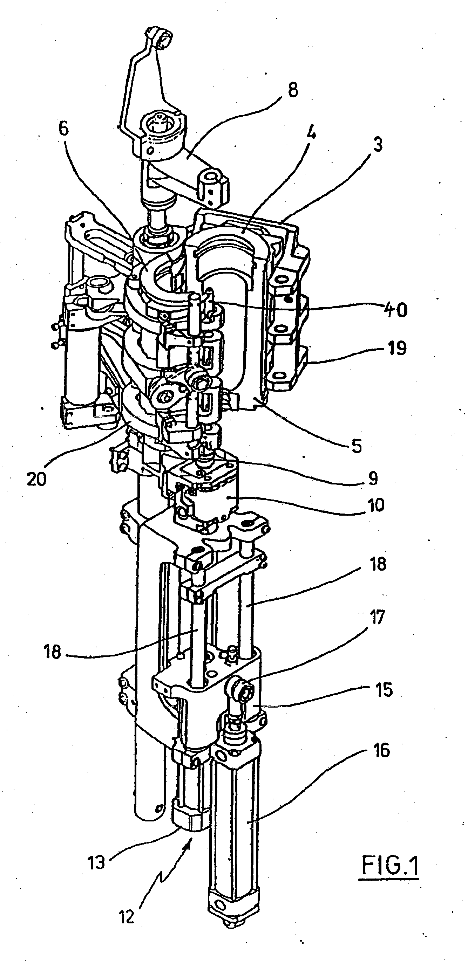

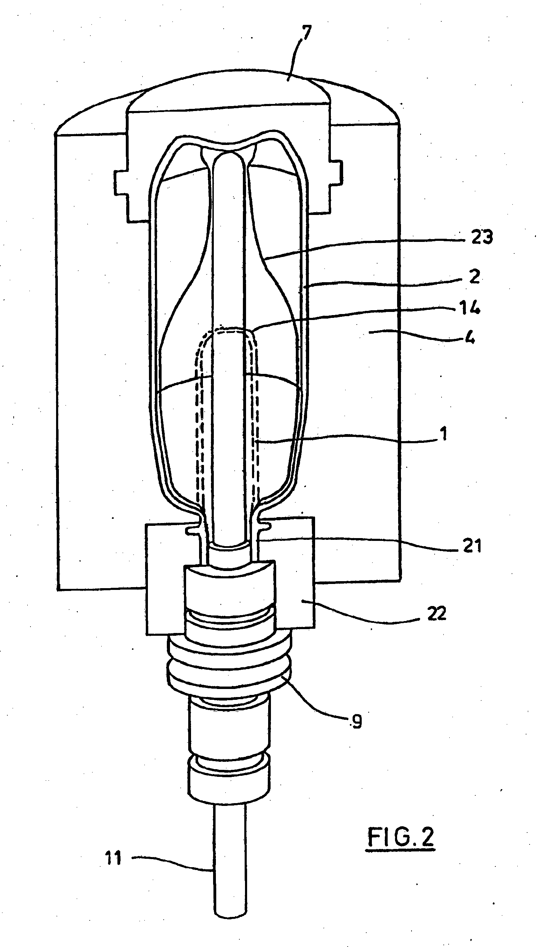

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformlinge (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwerdung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

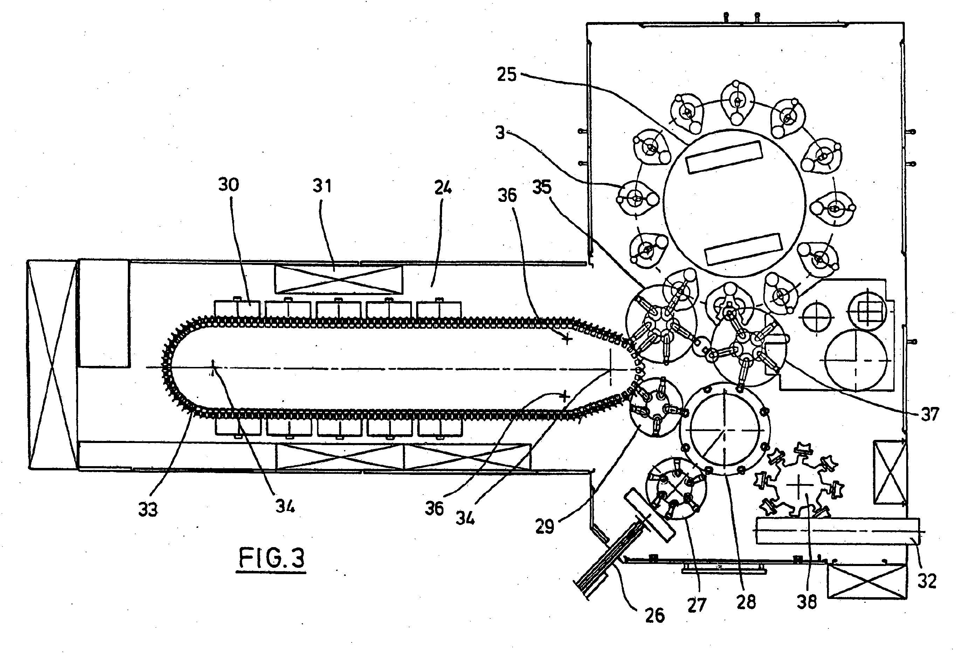

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

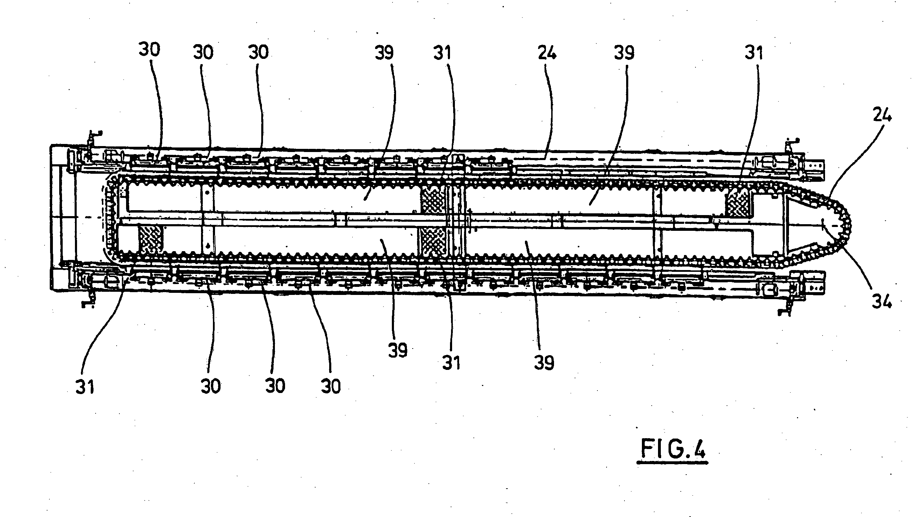

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

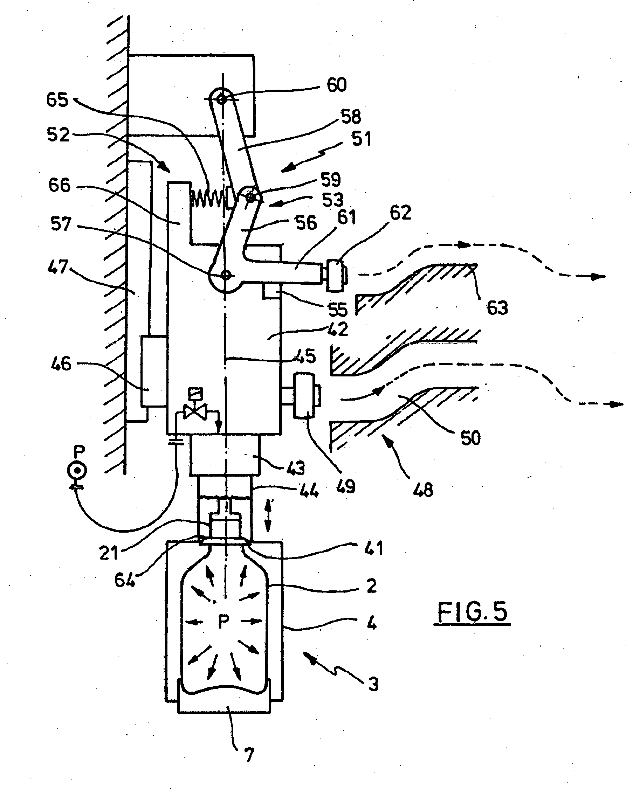

Fig. 5 zeigt eine geschnittene teilweise Darstellung der Blasstation (3). Zu erkennen ist ein geblasener Behälter (2), der mit seinem Mündungsabschnitt (21) aus der Blasform (4) herausragt. Gemäß dem dargestellten Ausführungsbeispiel liegt der Behälter (2) mit seinem Stützring (41) außenseitig auf der Blasform (4) auf. Im dargestellten Betriebszustand ist ein Anschlußelement (42), das dem in Fig. 1 dargestellten Anschlußkolben (10) entsprechen kann, abgedichtet gegen die Blasform (4) gefahren.

Das Anschlußelement (42) besteht im wesentlichen aus einem rohrartigen Hauptkörper (43), der mit einem der Blasform (4) zugewandt angeordneten Endsegment (44) versehen ist. Das Endsegment (44) ist stutzenartig ausgebildet und weist einen geringeren Außendurchmesser als der Hauptkörper (43) auf.

Das Anschlußelement (42) ist in Richtung einer im wesentlichen vertikal verlaufenden Längsachse (45) verschieblich angeordnet. Hierzu kann beispielsweise ein mit dem Anschlußelement (42) verbundenes Kopplungselement (46) gleitfähig in einer Schiene (47) geführt sein.

Eine Positionierung des Anschlußelementes (42) erfolgt unter Verwendung einer Stelleinrichtung (48). Beim dargestellten Ausführungsbeispiel weist die Stelleinrichtung (48) mindestens eine mit dem Anschlußelement (42) verbundene Führungsrolle (49) auf, die entlang einer Kurvenbahn (50) geführt ist. Die Kurvenbahn (50) weist einen in Richtung der Längsachse (45) konturierten Verlauf auf, um zugeordnete Hub- und Absenkbewegungen des Anschlußelementes (42) vorzugeben. Durch die Kombination der Führungsrolle (49) und der Kurvenbahn (50) wird eine mechanische Kurvensteuerung für das Anschlußelement (42) bereitgestellt.

Das Anschlußelement (42) ist darüber hinaus mit einer Andruckeinrichtung (51) versehen, die die erforderlichen Gegenkräfte bereitstellt, um das Anschlußelement (42) auch bei einem Einwirken eines Blasdruckes innerhalb des Behälters (2) in einer vorgegebenen Position zu halten. Vorzugsweise ist die Andruckeinrichtung (51) mit einer Arretierung (52) versehen, um eine eingenommene Positionierung zu stabilisieren. Durch die Arretierung (52) ist es möglich, die Kurvenbahn (50) nur in denjenigen Bereichen verlaufen zu lassen, in denen auch tatsächlich eine Positionsveränderung für das Anschußelement (42) erfolgt. Bei Verwendung eines rotierenden Blasrades (25) braucht sich somit die Kurvenbahn (50) nicht entlang des gesamten Umfanges des Blasrades (25) zu erstrecken, es sind vielmehr vergleichsweise kurze Kurvensegmente ausreichend. Die Arretierung (52) vermeidet darüber hinaus die Einbringung von erheblichen durch den Blasdruck generierter Druckkräfte in die Kurvenbahn (50), die durch die Führungsrolle (49) übertragen werden könnten.

Gemäß dem in Fig. 5 dargestellten Ausführungsbeispiel besteht die Andruckeinrichtung (51) im wesentlichen aus einem Kniehebel (53) mit einer Positioniereinrichtung (54) und einem Anschlag (55). Der Kniehebel (53) besteht aus einem Primärhebel (56), der über ein Schwenkgelenk (57) mit dem Anschlußelement (42) verbunden ist, und einem Sekundärhebel (58), der über ein Kniegelenk (59) mit dem Primärhebel und über ein Schwenkgelenk (60) mit einer Tragstruktur verbunden ist. Der Primärhebel (56) ist mit einem Stellhebel (61) gekoppelt, der im Bereich des Schwenkgelenkes (57) mit dem Primärhebel (56) verbunden ist und gemeinsam mit dem Primärhebel (56) eine winkelförmige Grundstruktur aufspannt.

Im Bereich seiner dem Schwenkgelenk (57) abgewandten Ausdehnung haltert der Stellhebel (61) eine Führungsrolle (62), die entlang einer Kurvenbahn (63) geführt ist.

In dem in Fig. 5 dargestellten Betriebszustand ist das Anschlußelement (42) gegen die Blasform (4) gefahren und wird über eine Dichtung (64) gegenüber der Blasform (4) oder gegenüber dem Stützring (41) abgedichtet. Der Stellhebel (61) liegt am Anschlag (55) an und der Kniehebel (53) nimmt eine Übertotpunktlage ein. In dieser Übertotpunktlage wird der Kniehebel (53) durch eine Feder (65) stabilisiert. Beim dargestellten Ausführungsbeispiel ist die Feder (65) als eine Druckfeder ausgebildet und zwischen einem Anschlag (66) des Anschlußelementes (52) und einem Umgebungsbereich des Kniegelenkes (59) angeordnet. Durch diese Stabilisierung des Kniehebels (53) ist es möglich, die Kurvenbahn (63) nur in denjenigen Bereichen eines Umfanges des Blasrades (65) anzuordnen, in denen eine Verstellung des Kniehebels (53) erfolgen soll.

Nach einem Abschluß des Blasvorganges wird der Kniehebel (53) unter Verwendung der dargestellten Kurvensteuerung zunächst aus der Übertotpunktlage gemäß Fig. 5 in eine Positionierung überführt, in der das Kniegelenk (59) in der Zeichnungsebene links von der Längsachse (45) angeordnet ist. Die Beaufschlagung des Kniehebels (53) durch die Feder (65) wird hierbei in geeigneter Art und Weise außer Kraft gesetzt. Das Anschlußelement (42) kann anschließend unter Verwendung der Führungsrolle (49) und der Kurvenbahn (50) angehoben werden, damit der geblasene Behälter (2) aus der Blasform (4) entnommen werden und ein neuer Vorformling (1) in die Blasform (4) eingesetzt werden kann. Nach einem Schließen der Blasform (4) wird das Anschlußelement (42) unter Verwendung der Kurvensteuerung wieder abgesenkt und der Kniehebel (53) wird unter Verwendung der zugeordneten Kurvensteuerung erneut in die Übertotpunktlage versetzt. Bei einer Anordnung der Feder (65) derart, daß diese den Kniehebel (53) nach Erreichen einer gestreckten Positionierung automatisch in die Übertotpunktlage überführt, ist es ausreichend, die Kurvenbahn (63) für eine einseitige Beaufschlagung der Führungsrolle (62) auszubilden.

Bei einer Überführung der Hebel (56, 58) des Kniehebels (53) ausgehend von einer gestreckten Positionierung in die Übertotpunktlage gemäß Fig. 5 erfolgt eine leichte Abstandsvergrößerung zwischen dem Anschlußelement (42) und der Blasform (4). Zur Gewährleistung einer ausreichenden Dichtigkeit weist die Dichtung (64) eine Elastizität derart auf, daß entsprechende kleine Abstandsänderungen überbrückt werden können. Beispielsweise kann die Dichtung (64) mit aufspreizbaren Elementen, beispielsweise einer Dichtlippe, versehen werden, die bei einer Einwirkung des Blasdruckes zu einer verstärkten Abdichtung verformt werden.

Alternativ zur Verwendung einer in Fig. 5 dargestellten Druckfeder können auch andere Hilfsmittel zur Festhaltung des Kniehebels (53) in der Übertotpunktlage verwendet werden. Gedacht ist beispielsweise an eine Rastung, die Verwendung eines Haltemagneten oder die Verwendung eines elastischen Klemmelementes. Alternativ zur Ausstattung der Andruckeinrichtung (51) mit dem Kniehebel (53) ist auch daran gedacht, als Arretierung (52) beispielsweise einen Bolzen oder eine Klappe zu verwenden. Wesentlich ist lediglich, daß eine mechanische Aufnahme der einwirkenden Kräfte gewährleistet ist, die vom Blasdruck auf das Anschlußelement (42) übertragen werden.

## Patentansprüche

1. Verfahren zur Blasformung von Behältern (2), bei dem ein Vorformling (1) nach einer thermischen Konditionierung innerhalb einer Blasform (4) durch Blasdruckeinwirkung in den Behälter (2) umgeformt wird sowie bei dem Blasgas durch ein Anschlußelement (42) hindurch in einen Innenraum des Vorformlings (1) eingeleitet wird und bei dem das Anschlußelement (42) zur Abdichtung gegenüber dem Vorformling (1) in Richtung einer Vorformlingslängsachse von einer Andruckeinrichtung (51) beaufschlagt wird, sowie bei dem auf das Anschlußelement (42) einwirkende Druckkräfte von einer mechanischen Arretierung (52) der Andruckeinrichtung (51) aufgenommen werden und das Anschlußelement (42) von der Arretierung (52) lösbar fixiert wird, **dadurch gekennzeichnet, daß** als Arretierung (52) ein Kniehebel (53) verwendet wird, der die Arretierfunktion in einer Übertotpunktlage ausübt.

2. Verfahren nach Anspruch 1, **dadurch gekennzeichnet, daß** die Arretierung (52) kurvengesteuert positioniert wird.

3. Verfahren nach einem der Ansprüche 1 oder 2, **dadurch gekennzeichnet, daß** die Arretierung (52) in einer Arretierungspositionierung lösbar fixiert wird.

4. Verfahren nach einem der Ansprüche 1 bis 3, **dadurch gekennzeichnet, daß** die Arretierung (52) lediglich abschnittweise entlang eines Umfanges eines Blasrades (25) kurvengesteuert positioniert wird.

5. Verfahren nach einem der Ansprüche 1 bis 4, **dadurch gekennzeichnet, daß** eine Führungsrolle (62) der Arretierung (52) lediglich einseitig von einer Kurvenbahn (63) beaufschlagt wird.

6. Verfahren nach einem der Ansprüche 1 bis 5, **dadurch gekennzeichnet, daß** das Anschlußelement (42) kurvengesteuert positioniert wird.

7. Verfahren nach einem der Ansprüche 1 bis 6, **dadurch gekennzeichnet, daß** das Anschlußelement (42) in lotrechter Richtung oberhalb der Blasform (4) positioniert und zur Erreichung eines gegenüber der Blasform (4) abgedichteten Zustandes gegenüber der Blasform (4) abgesenkt wird.

8. Verfahren nach einem der Ansprüche 1 bis 7, **dadurch gekennzeichnet, daß** das Anschlußelement (42) von mindestens einer elastischen Dichtung (64) gegenüber der Blasform (4) abgedichtet wird.

9. Verfahren nach einem der Ansprüche 1 bis 8, **dadurch gekennzeichnet, daß** von einer Dichtung (64) Abstandsveränderungen zwischen dem Anschlußelement (42) und der Blasform (4) ausgeglichen werden.

10. Vorrichtung zur Blasformung von Behältern (2), die mindestens eine Blasstation (3) mit einer Blasform (4) aufweist, sowie bei der sich ein Strömungsweg für ein Blasgas zur Blasformung der Behälter (2) durch ein Anschlußelement (42) hindurch erstreckt und bei der die Blasstation (3) mit dem in Richtung einer Längsachse positionierbaren Anschlußelement (42) versehen ist, das mit einer Andruckeinrichtung (51) gekoppelt ist, wobei die Andruckeinrichtung (51) eine mechanische Arretierung (52) zur Aufnahme von auf das Anschlußelement (42) einwirkenden Druckkräften sowie zur lösbaren Fixierung des Anschlußelementes (42) aufweist, **dadurch gekennzeichnet, daß** der Kniehebel (53) in der Arretierungspositionierung in einer Übertotpunktlage angeordnet ist.

11. Vorrichtung nach Anspruch 10, **dadurch gekennzeichnet, daß** die Arretierung (52) kurvengesteuert angeordnet ist.

12. Vorrichtung nach einem der Ansprüche 10 oder 11 , **dadurch gekennzeichnet, daß** die Arretierung (52) in einer Arretierungspositionierung von mindestens einer Feder (65) stabilisiert ist.

13. Vorrichtung nach einem der Ansprüche 10 bis 12, **dadurch gekennzeichnet, daß** sich eine Führungsbahn (50) für eine Führungsrolle (59) der Arretierung (52) lediglich abschnittweise entlang eines Umfanges eines Blasrades (25) erstreckt.

14. Vorrichtung nach einem der Ansprüche 10 bis 13, **dadurch gekennzeichnet, daß** die Führungsrolle (59) der Arretierung (52) lediglich einseitig von der Kurvenbahn (50) beaufschlagt ist.

15. Vorrichtung nach einem der Ansprüche 10 bis 14, **dadurch gekennzeichnet, daß** das Anschlußelement (42) kurvengesteuert angeordnet ist.

16. Vorrichtung nach einem der Ansprüche 10 bis 15, **dadurch gekennzeichnet, daß** das Anschlußelement (42) in lotrechter Richtung oberhalb einer Blasform (4) positioniert ist.

17. Vorrichtung nach einem der Ansprüche 10 bis 16, **dadurch gekennzeichnet, daß** das Anschlußelement (42) von einer Dichtung (64) gegenüber der Blasform (4) abgedichtet ist.

18. Vorrichtung nach Anspruch 17, **dadurch gekennzeichnet, daß** die Dichtung (64) in Richtung einer Längsachse (45) des Anschlußelementes (42) zur abdichtenden Überbrückung relativ zueinander unterschiedlicher Abstände zwischen der Blasform (4) und dem Anschlußelement (42) ausgebildet ist.

## Claims

1. A method for the blow moulding of containers (2) wherein
a preform (1), after having been conditioned thermally, is moulded in a blow mould (4) by the action of blowing pressure to form the container (2), and wherein blowing gas is passed through a connecting element (42) and introduced into an interior space of the preform (1), and wherein the connecting element (42) is charged with pressure by a pressure device (51) in the direction of a longitudinal preform axis to be sealed against the preform (1), and wherein compressive forces acting on the connecting element (42) are absorbed by a mechanical locking mechanism (52) of the pressure device (51) and the connecting element (42) is located by the locking mechanism (52) in a detachable manner,
**characterised in that**
- a toggle lever (53) which fulfils the locking function in an over-centre position is used as locking mechanism (52).

2. The method according to Claim 1, **characterised in that** the locking mechanism (52) is positioned in a cam-controlled manner.

3. The method according to any one of Claims 1 or 2, **characterised in that** the locking mechanism (52) is located in a locking position in a detachable manner.

4. The method according to any one of Claims 1 to 3, **characterised in that** the locking mechanism (52) is positioned in a cam-controlled manner only in sections along a perimeter of a blow moulding wheel (25).

5. The method according to any one of Claims 1 to 4, **characterised in that** a guide roller (62) of the locking mechanism (52) is charged by a cam track (63) on one side only.

6. The method according to any one of Claims 1 to 5, **characterised in that** the connecting element (42) is positioned in a cam-controlled manner.

7. The method according to any one of Claims 1 to 6, **characterised in that** the connecting element (42) is positioned in a vertical direction above the blow mould (4) and is lowered relative to the blow mould (4) in order to reach a state in which it is sealed against the blow mould (4).

8. The method according to any one of Claims 1 to 7, **characterised in that** the connecting element (42) is sealed against the blow mould (4) by means of at least one elastic seal (64).

9. The method according to any one of Claims 1 to 8, **characterised in that** changes in the gap between the connecting element (42) and the blow mould (4) are compensated by a seal (64).

10. A device for the blow moulding of containers (2), comprising at least one blowing station (3) with a blow mould (4), and wherein a flow path for a blowing gas for blow moulding the containers (2) extends through a connecting element (42). and wherein the blowing station (3) is provided with the connecting element (42) that can be positioned in the direction of a longitudinal axis, the connecting element (42) being coupled to a pressure device (51), wherein the pressure device (51) comprises a mechanical locking mechanism (52) for absorbing compressive forces acting on the connecting element (42) as well as for locating the connecting element (42) in a detachable manner, **characterised in that**, in the locking position, the toggle lever (53) is arranged in an over-centre position.

11. The device according to Claim 10, **characterised in that** the locking mechanism (52) is arranged in a cam-controlled manner.

12. The device according to any one of Claims 10 or 11, **characterised in that**, in a locking position, the locking mechanism (52) is stabilised by at least one spring (65).

13. The device according to any one of Claims 10 to 12, **characterised in that** a guide track (50) for a guide roller (59) of the locking mechanism (52) extends along a perimeter of a blow moulding wheel (25) in sections only.

14. The device according to any one of Claims 10 to 13, **characterised in that** the guide roller (59) of the locking mechanism (52) is charged by the cam track (50) on one side only.

15. The device according to any one of Claims 10 to 14, **characterised in that** the connecting element (42) is arranged in a cam-controlled manner.

16. The device according to any one of Claims 10 to 15, **characterised in that** the connecting element (42) is positioned in a vertical direction above the blow mould (4).

17. The device according to any one of Claims 10 to 16, **characterised in that** the connecting element (42) is sealed against the blow mould (4) by means of a seal (64).

18. The device according to Claim 17, **characterised in that** the seal (64) is formed in the direction of a longitudinal axis (45) of the connecting element (42) in order to override in a sealing mariner gaps between the blow mould (4) and the connecting element (42), the gaps being different in relation to each other.

## Revendications

1. Procédé de moulage par soufflage de récipients (2) dans le cadre duquel une préforme (1), après un conditionnement thermique à l'intérieur d'un moule de soufflage (4), est transformée en un récipient (2) sous l'action d'une pression de soufflage et dans le cadre duquel un gaz de soufflage est injecté à travers un élément de raccordement (42) dans un espace intérieur de la préforme (1), l'élément de raccordement (42) étant soumis à l'action d'un dispositif presseur (51) agissant dans le sens d'un axe longitudinal de la préforme pour assurer l'étanchéification par rapport à la préforme (1), et pour lequel les pressions agissant sur l'élément de raccordement (42) sont absorbées par un dispositif d'arrêt mécanique (52) du dispositif presseur (51), l'élément de raccordement (42) du dispositif d'arrêt (52) étant fixé de façon amovible, **caractérisé en ce que le** dispositif d'arrêt (52) utilisé est un levier à genouillère (53) qui exerce la fonction d'arrêt en une position au-delà d'un point mort.

2. Procédé selon la revendication 1, **caractérisé en ce que** le dispositif d'arrêt (52) est positionné par une commande à came.

3. Procédé selon l'une des revendications 1 ou 2, **caractérisé en ce que** le dispositif d'arrêt (52) est fixé de façon amovible en une position d'arrêt.

4. Procédé selon l'une des revendications 1 à 3, **caractérisé en ce que** le dispositif d'arrêt (52) est, sur certaines sections seulement le long de la circonférence d'une roue de soufflage (25), positionné par une commande à came.

5. Procédé selon l'une des revendications 1 à 4, **caractérisé en ce qu'**un galet de guidage (62) du dispositif d'arrêt (52) est, d'un côté seulement, en contact avec une piste de came (63).

6. Procédé selon l'une des revendications 1 à 5, **caractérisé en ce que** l'élément de raccordement (42) est positionné par une commande à came.

7. Procédé selon l'une des revendications 1 à 6, **caractérisé en ce que** l'élément de raccordement (42) est positionné perpendiculairement au-dessus du moule de soufflage (4) et abaissé sur le moule de soufflage (4) jusqu'à obtention d'un contact étanche avec celui-ci.

8. Procédé selon l'une des revendications 1 à 7, **caractérisé en ce que** l'élément de raccordement (42) est étanchéifié par rapport au moule de soufflage (4) par au moins un joint élastique (64).

9. Procédé selon l'une des revendications 1 à 8, **caractérisé en ce qu'**un joint (64) compense des variations d'écartement entre l'élément de raccordement (42) et le moule de soufflage (4).

10. Dispositif de moulage par soufflage de récipients (2) présentant au moins une station de soufflage (3) avec un moule de soufflage (4) ainsi qu'une voie d'écoulement d'un gaz de soufflage pour le moulage des récipients (2) par soufflage s'étendant à travers un élément de raccordement (42) et dont la station de soufflage (3) est équipée d'un élément de raccordement (42) pouvant être positionné dans le sens d'un axe longitudinal, cet élément de raccordement étant couplé avec dispositif presseur (51) qui présente un dispositif d'arrêt mécanique (52) qui absorbe les pressions agissant sur l'élément de raccordement (42) et permet une fixation amovible de l'élément de raccordement (42), **caractérisé en ce que** le levier à genouillère (53) est, en position d'arrêt, placé en une position au-delà d'un point mort.

11. Dispositif selon la revendication 10, **caractérisé en ce que** le dispositif d'arrêt (52) est agencé de façon à être commandé par une came.

12. Dispositif selon l'une des revendications 10 ou 11, **caractérisé en ce que** le dispositif d'arrêt (52) est, en une position d'arrêt, stabilisé par au moins un ressort (65).

13. Dispositif selon l'une des revendications 10 à 12, **caractérisé en ce qu'**une glissière de guidage (50) d'un galet de guidage (59) du dispositif d'arrêt (52) s'étend sur certaines sections seulement le long de la circonférence d'une roue de soufflage (25).

14. Dispositif selon l'une des revendications 10 à 13, **caractérisé en ce que** le galet de guidage (59) du dispositif d'arrêt (52) est en contact avec la piste de came (50) d'un côté seulement.

15. Dispositif selon l'une des revendications 10 à 14, **caractérisé en ce que** l'élément de raccordement (42) est agencé de façon à être commandé par une came.

16. Dispositif selon l'une des revendications 10 à 15, **caractérisé en ce que** l'élément de raccordement (42) est positionné perpendiculairement au-dessus d'un moule de soufflage (4).

17. Dispositif selon l'une des revendications 10 à 16, **caractérisé en ce que** l'élément de raccordement (42) est étanchéifié par rapport au moule de soufflage (4) par un joint (64).

18. Dispositif selon la revendication 17, **caractérisé en ce que** le joint (64) est conçu de façon à étanchéifier et compenser dans le sens d'un axe longitudinal (45) de l'élément de raccordement (42) des variations d'écartement entre l'élément de raccordement (42) et le moule de soufflage (4).
